# FASCICULE DE BREVET EUROPEEN

(11) **EP 0 444 566 B1**
(45) Date de publication et mention de la délivrance du brevet: **12.10.1994**
(21) Numéro de dépôt: 91102719.1
(22) Date de dépôt: 25.02.1991
(51) Int. Cl.: G02B 6/25, B26F 3/00, B26D 7/14

(54) **Pince de coupe, à faible encombrement, pour fibre optique**
Schneidezange mit kleiner Sperre zum Schneiden von optischen Fasern
Cutting pliers of small size for cutting optical fibres

(30) Priorité: 01.03.1990 FR 9002580
(43) Date de publication de la demande: 04.09.1991
(73) Titulaire: ALCATEL FIBRES OPTIQUES, F-95871 Bezons Cedex (FR)
(72) Inventeur: Hakoun, Roland, F-95330 Domont (FR); Galopin, Jean, F-78610 St. Leger en Yvelines (FR); Reslinger, Michel, F-91070 Bondoufle (FR)
(74) Mandataire: Weinmiller, Jürgen

(56) Documents cités:
- US-A- 4 474 319
- US-A- 4 573 617

## Description

L'invention concerne une pince de coupe, à faible encombrement, pour couper une fibre optique perpendiculairement à son axe, avec une précision de 1° reproductible dans des conditions de chantier.

Il est connu de réaliser une pince de coupe comportant :
- deux paires de mors pour immobiliser en deux points la fibre optique à couper; dans chaque paire, un mors étant fixe et un mors étant mobile, ce dernier étant guidé en translation par des tiges cylindriques coulissant dans des trous que comporte le mors;
- un premier dispositif mécanique permet d'écarter légèrement les deux mors de chaque paire afin d'insérer la fibre optique entre les mors;
- une pièce en forme d'arc de cercle, appelée galbe, située entre les deux paires de mors, et déplaçable pour être appliquée contre la fibre optique, lorsque celle-ci a été immobilisée par les deux paires de mors;
- un second dispositif mécanique permettant d'appliquer le galbe et la fibre l'un contre l'autre, de façon à tendre la fibre immobilisée;
- un tranchant en diamant, déplaçable pour être appliqué contre la fibre optique avec une force prédéterminée, pour amorcer une rupture qui est achevée par la tension que crée le galbe; et
- un troisième dispositif mécanique permettant d'appliquer le tranchant contre la fibre tendue.

Les trois dispositifs mécaniques sont actionnés indépendamment pour déplacer en translation, respectivement : les deux paires de mors, le galbe, et le tranchant en diamant. Ces trois translations sont réalisées dans cet ordre successivement. Ces trois dispositifs mécaniques, dans les pinces de types connus, ont pour inconvénient d'être encombrants et peu pratiques à utiliser, puisqu'il faut manoeuvrer successivement les trois dispositifs dans un ordre convenable. Les pinces de types connus ont aussi pour inconvénient de provoquer parfois une pollution de la tranche de la fibre optique, car celle-ci peut facilement rencontrer des poussières lorsqu'elle est introduite dans l'espace restreint qui est ménagé entre les mors lorsque les mors sont écartés.

Le brevet US 4 474 319 décrit une telle pince. Dans celle-ci, le galbe est appliqué contre la fibre par un déplacement de la fibre, obtenu par une rotation de deux bras portant respectivement les deux paires de mors. Ces deux bras pivotent autour d'un axe orthogonal à la direction de la fibre, au moyen d'un dispositif complexe comportant des cames.

Dans d'autres types de pince connus, la fibre doit être introduite dans un tube capillaire. L'introduction est délicate et le risque de polluer la fibre est élevé.

Les trois dispositifs mécaniques des pinces de types connus ont pour inconvénient de s'user et de dégrader la précision de coupe, au fur et à mesure que l'usure augmente, parce que la fibre est positionnée de manière de plus en plus imprécise. En outre, la complexité de ces dispositifs mécaniques rend pratiquement impossible la maintenance de ces dispositifs par l'acheteur de la pince; celui-ci doit renvoyer la pince chez le fabricant pour la maintenance. Enfin, les pinces de types connus ont pour inconvénient d'être spécialisées soit pour la coupe d'une fibre nue exclusivement, soit pour la coupe d'une fibre gainée presque jusqu'au point de coupe, exclusivement. Dans ce dernier cas, l'une des paires de mors a des dimensions adaptées pour serrer la fibre avec sa gaine, alors que l'autre paire de mors a des dimensions adaptées pour serrer l'extrémité de la fibre, qui est dénudée sur quelques centimètres.

Le but de l'invention est de remédier à ces inconvénients des pinces de coupe, de types connus.

Selon l'invention, une pince de coupe, à faible encombrement, pour fibre optique, comportant :
distantes l'une de l'autre, les deux mors de chaque paire étant rapprochables l'un de l'autre
- deux paires de mors pour immobiliser entre eux, en deux points distants l'un de l'autre, une fibre optique à couper;
- des moyens pour rapprocher l'un de l'autre les deux mors de chaque paire de façon à appliquer les deux paires de mors respectivement en deux points distants de la fibre;
- un galbe situé entre les deux paires de mors, d'un côté de la direction d'immobilisation de la fibre entre les deux paires de mors;
- un tranchant; situé en vis-à-vis du galbe, de l'autre côté de la direction d'immobilisation de la fibre;
- des moyens pour appliquer le galbe contre la fibre immobilisée entre les deux paires de mors afin de la tendre entre ces deux paires de mors; et
- des moyens pour appliquer le tranchant contre la fibre tendue entre les deux paires de mors;
   est caractérisée en ce que :
- les moyens pour rapprocher l'un de l'autre les deux mors de chaque paire comportent une première pièce solidaire d'un premier mors de chacune des deux paires de mors, montée tournante autour d'un axe parallèle à la direction d'immobilisation de la fibre; et une deuxième pièce solidaire d'un second mors de chacune des deux paires de mors, montée tournante autour d'un axe également parallèle à la direction d'immobilisation de la fibre;
- les moyens pour appliquer le galbe contre la fibre immobilisée comportent une troisième pièce solidaire du galbe, montée tournante autour d'un axe également parallèle à la direction d'immobilisation de la fibre;
- les moyens pour appliquer le tranchant contre la fibre comportent une quatrième pièce solidaire du tranchant, montée tournante autour d'un axe également parallèle à la direction d'immobilisation de la fibre.

Le fait que tous les dispositifs mécaniques de cette pince de coupe soit mobiles en rotation autour d'un axe parallèle à la direction d'immobilisation de la fibre, simplifie énormément ces dispositifs mécaniques et permet d' ouvrir largement la pince pour : insérer la fibre dans la pince pratiquement sans risque de pollution; nettoyer l'intérieur de la pince, ce qui contribue à réduire les risques de pollution; assurer la maintenance de la pince, notamment des réglages et le remplacement du tranchant en diamant. La simplicité de ces dispositifs mécaniques a pour conséquence qu'ils sont moins sensibles à l'usure, en ce qui concerne la précision de positionnement de la fibre.

Selon un mode de réalisation particulier :
- la première et la deuxième pièces sont montées de façon à tourner en sens inverse l'une de l'autre, et sont écartées l'une de l'autre par un premier ressort de rappel;
- la quatrième et la première pièces sont montées de façon à tourner dans le même sens, la quatrième pièce étant disposée à l'extérieur de la première pièce et reliée à cette dernière par un deuxième ressort; ce ressort transmettant à la première pièce une force
   éventuellement exercée par un utilisateur sur la quatrième pièce;
- la troisième et la deuxième pièces sont montées de façon à tourner dans le même sens, la troisième pièce étant disposée à l'extérieur de la deuxième pièce et reliée à cette dernière par un troisième ressort; ce ressort transmettant à la deuxième pièce une force éventuellement exercée par un utilisateur sur la troisième pièce;
   et ces ressorts sont tels que, lorsque deux forces de valeurs croissantes sont exercées progressivement sur la troisième et la quatrième pièce, respectivement :
- les mors se ferment avant que le galbe soit appliqué contre la fibre;
- et le galbe est appliqué contre la fibre avant que le tranchant soit appliqué contre la fibre.

Grâce à ces caractéristiques, une pression continue des doigts de l'opérateur referme les paires de mors, puis rapproche le galbe pour tendre la fibre, et enfin amorce la rupture de la fibre en appliquant le tranchant. L'opérateur n'a donc pas à déplacer ses doigts pour réaliser trois manoeuvres distinctes, dans un ordre fixé, sa tâche est donc bien simplifiée.

Selon un mode de réalisation particulier, la pince selon l'invention comporte en outre des moyens pour guider la fibre devant le galbe et le tranchant en diamant, ces moyens comportant :
- une plaque creusée d'un sillon en V, située à l'extérieur des deux paires de mors, et accessible à l'opérateur pour permettre à celui-ci de presser la fibre dans le sillon, avec l'un de ses doigts;
- et un bras fixé à l'un des mors pour former avec celui-ci une encoche en V, ayant un plan orthogonal à la fibre, et dont le fond détermine la position de la fibre.

Cette caractéristique additionnelle permet d'améliorer la précision du positionnement de la fibre dans la pince. Cette précision de positionnement permet d'utiliser un tranchant en diamant ayant une longueur plus petite, et donc un moindre coût, que le tranchant des pinces de type connu, et surtout permet d'obtenir une meilleure reproductibilité des coupes.

Selon un mode de réalisation particulier, au moins l'un des mors comporte une pièce démontable et retournable pour adapter le mors à deux diamètres de fibre différents correspondant respectivement à une fibre gainée et à une fibre dénudée. Grâce à cette caractéristique la pince n'est pas spécialisée pour un seul type de coupe.

L'invention sera mieux comprise et d'autres détails apparaîtront à l'aide de la description ci-dessous et des figures l'accompagnant :
- les figures 1, 2, 3, 4 représentent respectivement quatre étapes successives de l'utilisation d'un exemple de réalisation de la pince selon l'invention;
- la figure 5 représente la même étape de fonctionnement que la figure 4, mais avec une direction de vue différente;
- les figure 6 et 7 représentent plus en détail cet exemple de réalisation, respectivement par une vue de face et par une vue de côté en coupe;
- La figure 8 représente une variante de réalisation d'une partie de cet exemple de réalisation de la pince selon l'invention.

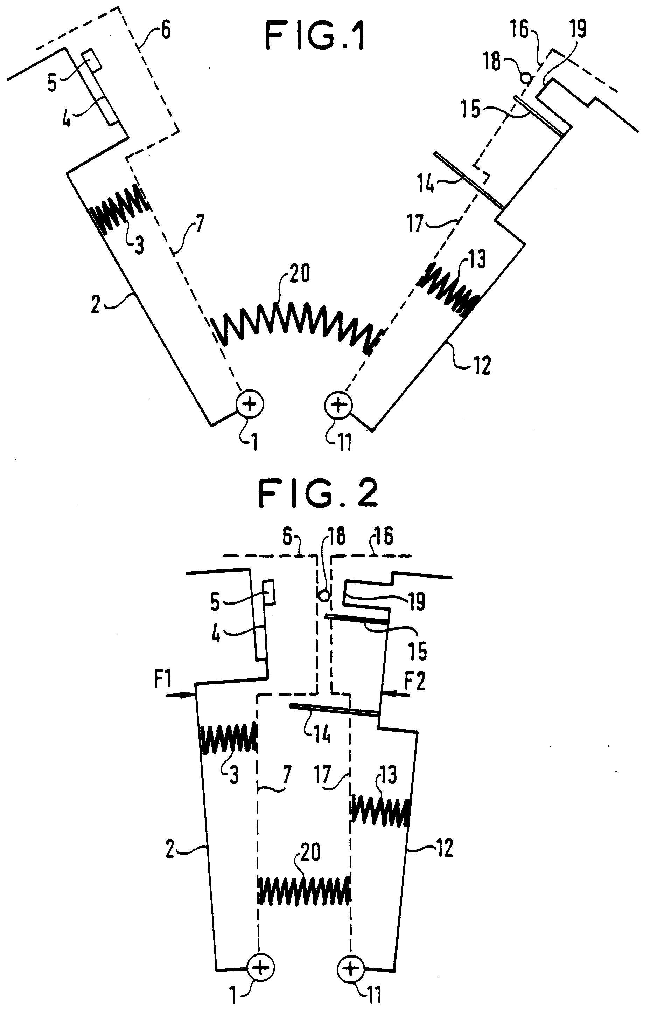

Sur les figures 1 à 5, les pièces constituant cet exemple de réalisation sont représentées de manière très schématique pour faire apparaître plus clairement le fonctionnement de chaque pièce. Sur la figure 1, la pince est complètement ouverte pour permettre la mise en place d'une fibre 18 qui est à couper. La pince comporte deux axes de rotation, 1 et 11, parallèles entre eux et parallèles à la direction de la fibre 18. Les pièces essentielles de la pince sont :
- une pièce 2, mobile en rotation autour de l'axe 1, supportant un tranchant en diamant 5 par l'intermédiaire d'une lame ressort 4;
- une pièce 7, mobile en rotation autour de l'axe 1 et supportant deux mors, dont un seul est représenté, le mors 6;
- une pièce 12 mobile en rotation autour de l'axe 11, supportant un galbe 19 et deux butées, 14 et 15;
- une pièce 17, mobile en rotation autour de l'axe 11 et supportant deux mors, dont un seul est représenté, le mors 16;
- un ressort 3, intercalé entre les pièces 2 et 7, pour les écarter lorsqu'elles sont en repos;
- un ressort 13, intercalé entre les pièces 12 et 17 pour les écarter lorsque la pince est au repos;
- un ressort 20, intercalé entre les pièces 7 et 17 pour les écarter lorsque la pince est au repos.

Les pièces 2 et 12 sont les pièces les plus extérieures de la pince. Lorsqu'un utilisateur utilise la pince, il exerce une pression, avec ses doigts, tendant à refermer l'une dans l'autre les pièces 2 et 12. Les pièces 7 et 17 sont les pièces les plus intérieures de la pince.

Dans une première étape de son fonctionnement (Fig. 1), la pince est au repos, c'est-à-dire ouverte sous l'action du ressort 20 qui écarte les pièces 7 et 17. L'utilisateur peut alors placer la fibre 18 entre les mors 6 et 16, très commodément et avec peu de risque de pollution, car l'ouverture de la pince est très large.

La figure 2 représente la deuxième étape du fonctionnement de la pince. L'utilisateur exerce deux forces opposées F1 et F2, avec ses doigts, sur les pièces 2 et 12. Ces forces sont transmises par les ressorts 3 et 13 et provoquent un rapprochement des pièces 7 et 17 supportant les mors, notamment les mors 6 et 16, pour immobiliser la fibre 18 en deux points distants de quelques centimètres. Le ressort 20 est comprimé au maximum, alors que les ressorts 3 et 13 sont peu comprimés, ce qui a pour conséquence que le tranchant en diamant 5 et le galbe 19 ne sont pas encore appliqués contre la fibre 18. La fibre 18 est immobilisée dans une position parfaitement rectiligne.

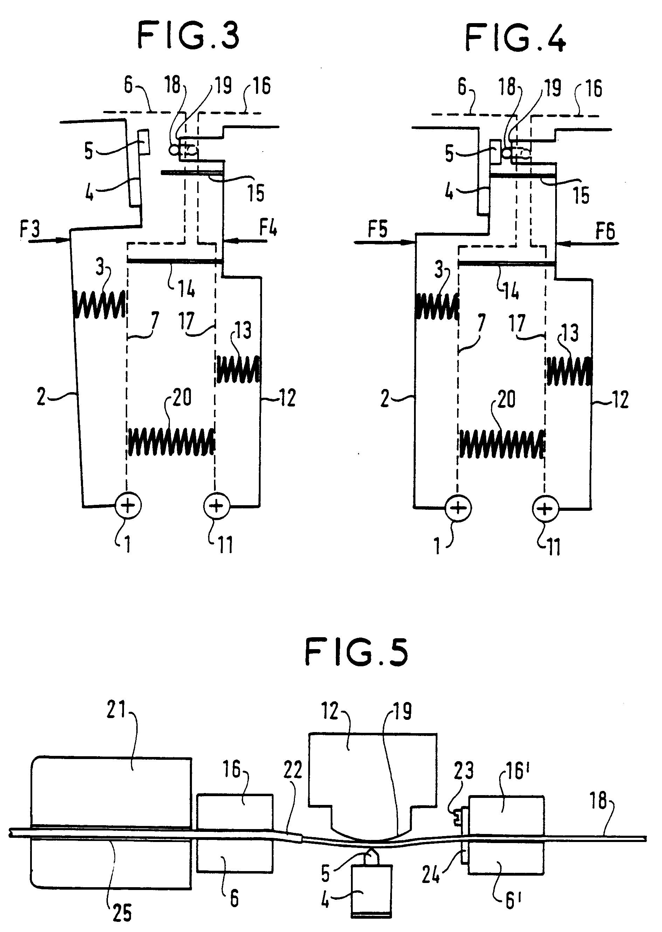

La figure 3 illustre la troisième étape du fonctionnement de la pince. L'opérateur exerce avec ses doigts une pression un peu plus forte que précédemment, en appliquant des forces opposées F3 et F4 ayant un module plus grand que les forces F1 et F2, respectivement sur les pièces 2 et 12. Ces forces compriment les ressorts 3 et 13, mais le ressort 13 est beaucoup plus comprimé que le ressort 3, bien qu'étant identique, parce que le ressort 13 est à une distance plus faible de l'axe 11 que la distance du ressort 3 par rapport à l'axe 1. Le ressort 20 n'est pas plus comprimé car les mors sont déjà arrivés en appui sur la fibre 18 au cours de la première étape du fonctionnement. La compression du ressort 13 provoque l'application du galbe 19 sur la fibre 18 pour tendre celle-ci. La traction exercée sur la fibre 18 par le galbe 19 est limitée au moyen de la butée 14 qui détermine la distance minimale entre la pièce 12 et la pièce 7 supportant les mors du côté opposé au galbe 19, par rapport à la fibre 18.

La figure 4 représente la quatrième étape du fonctionnement de la pince. L'opérateur exerce une pression encore plus forte avec ses doigts, en appliquant deux forces opposées F5 et F6, de module supérieur à celui de F3 et F4, respectivement sur les pièces 2 et 12. Le ressort 3 est plus comprimé que précédemment. La pièce 2 rapproche le tranchant en diamant 5 de la fibre 18. Il pénètre dans la fibre sur une profondeur de quelques microns créant une amorce de rupture. La rupture est réalisée par une propagation de cette amorce de rupture sous l'effet de la traction de la fibre. La force d'application du tranchant 5 n'est pas déterminée par les forces F5 et F6, mais par l'effort de flexion de la lame ressort 4 qui relie le tranchant 5 à la pièce 2. La profondeur de pénétration du tranchant 5 dans la fibre 18 est limitée par la butée 15 qui détermine la distance minimale entre le tranchant 5 et le galbe 19.

La figure 5 illustre aussi la quatrième étape du fonctionnement de la pince selon l'invention, en montrant la pince selon une direction de vue parallèle au plan de serrage des mors. Cette figure montre les mors 6 et 16 mentionnés précédemment, et des mors 6' et 16' qui n'étaient pas représentés sur les figures précédentes, et qui sont solidaires des mors 6 et 16 respectivement. Les mors 6 et 16 sont face à face alors que les mors 6' et 16' sont face à face, le galbe 19 et le tranchant 5 étant situés dans l'espace de quelques centimètres qui sépare ces deux paires de mors.

Dans cet exemple d'utilisation, la fibre 18 est dénudée partiellement. Elle est recouverte d'une gaine 22 jusqu'en un point situé entre la paire de mors 6, 16 et le galbe 19. Sa gaine 22 est conservée sur la plus grande partie de sa longueur, notamment à l'endroit de son passage entre la paire de mors 6, 16. Par contre, la paire de mors 6' et 16' serre la fibre 18 dénudée. La coupe est réalisée sur la partie dénudée.

Les étapes de fonctionnement décrites précedemment sont réalisées successivement dans cet ordre par une seule pression continue exercée par les doigts de l'utilisateur. La fibre et le résidu sont libérés en relâchant la pression des doigts, les mors étant réouverts par le ressort 20.

La figure 5 montre la cambrure de la fibre causée par le galbe 19, et la position du tranchant en diamant 5, juste avant qu'il cause la rupture de la fibre.

La figure 5 montre en outre des moyens de guidage optionnels permettant d'améliorer la précision de positionnement de la fibre 18 en face du galbe 19 et du tranchant 5. Ces moyens comportent une plaque 21, solidaire du mors 6, et creusée d'un sillon 25 en forme de V pour contenir la fibre gainée, à l'extérieur de la pince. La plaque 21 est perpendiculaire au plan des mors et extérieure à la pince. Elle est accessible de telle sorte que l'opérateur puisse maintenir la fibre dans le sillon 25 avec l'un de ses doigts de la main gauche; un autre doigt de la main gauche étant appliqué sur l'autre face de la plaque 21.

Par ailleurs, un bras de guidage 24 est fixé au mors 6', qui est symétrique du mors 6 par rapport au galbe 19, pour former avec le plan de serrage du mors 6' une encoche en forme de V. la fibre 18 repose au fond de cette encoche sous l'action de son poids, ou sous l'action de la cambrure due au fait qu'elle n'a pas une forme parfaitement rectiligne lorsqu'elle vient juste d'être déroulée d'une bobine. Le bras de guidage 24 est fixé au mors 6' par une vis 23, et un collage pour immobiliser son réglage. Ces moyens de guidage permettent d'obtenir une coupe orthogonale à l'axe de la fibre avec une précision de 1 ° reproductible.

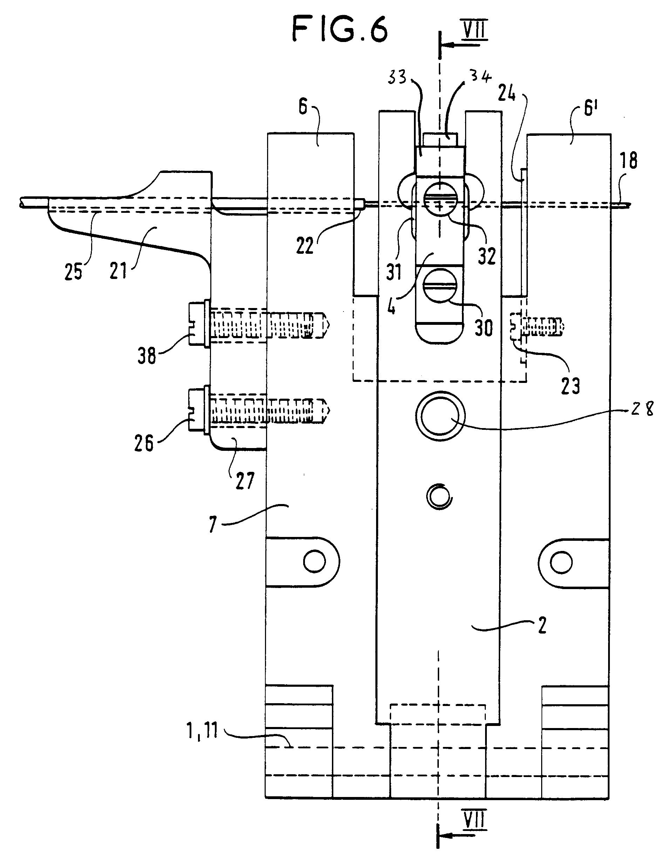

La figure 6 représente le même exemple de réalisation en vue de face, avec plus de détails. Il apparaît que la plaque 21 est prolongée par une patte 27 orthogonale à son plan et qui est fixée au mors 6 par deux vis 38 et 26. Cette figure montre aussi le bras 24 et sa vis de fixation 23, vissée dans le mors 6'.

Dans cet exemple de réalisation, les mors 6 et 6' sont intégrés à la pièce 7, qui est en aluminium par exemple. La pièce 7 a une forme générale qui est une fourche, et ce sont les deux dents de cette fourche qui constituent les mors 6 et 6'. Le tranchant 5 est monté sur un support 31 qui passe entre les deux branches de la fourche. Le support 31 est relié, par la lame ressort 4, à la pièce 2 qui est un bras déplaçable dans le plan médian de la fourche. Le support 31 est fixé à la lame ressort 4 par une vis 32. La lame 4 est fixée à la pièce 2 par une vis 30.

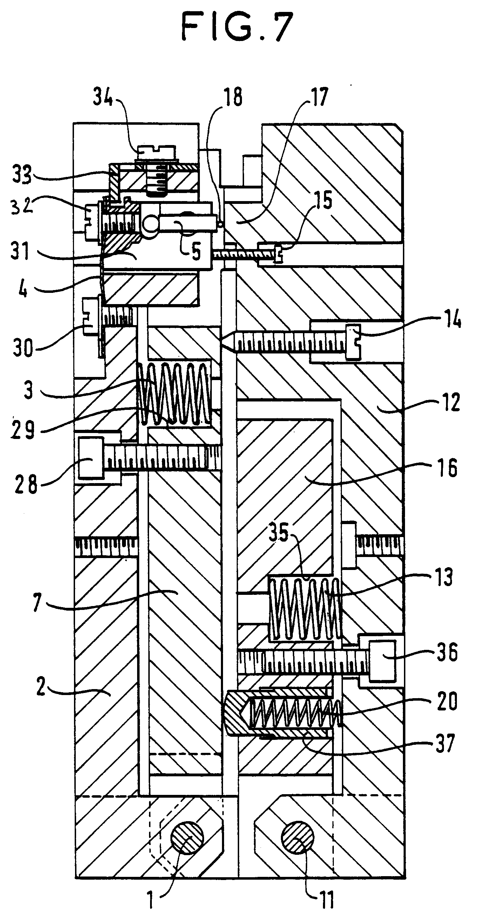

La figure 7 montre une vue en coupe, selon la direction de vue VII, de ce même exemple de réalisation. Sur cette figure, il apparaît que la pièce 31 supportant le tranchant 5 a un débattement qui est limité par une pièce 33 fixée à la pièce 2 par une vis 34. La butée 15 est constituée par une vis qui est vissée à travers la pièce 12 et dont l'extrémité bute sur la pièce 31. La butée 14 est constituée par une vis, vissée elle aussi à travers la pièce 12, et qui bute sur la pièce 7. Le ressort 3 est logé dans un trou 29 creusé dans la pièce 7 sur une face qui est en vis-à-vis de la pièce 2. Le ressort 13 est logé dans un trou 35 creusé dans la pièce 16, sur sa face située en vis-à-vis de la pièce 12.

Le ressort 20 est logé à l'intérieur d'un poussoir cylindrique 37 qui est logé dans un trou percé à travers la pièce 16 et débouchant en vis-à-vis de la pièce 7 et de la pièce 12. Un épaulement dans ce trou, et un épaulement sur le poussoir 37 limitent la course du poussoir 37 de telle sorte qu'il ne puisse pas sortir de ce trou lorsque la pince est largement ouverte. La pince peut être ouverte jusqu'à un angle voisin de 90°, son ouverture n'étant limitée que par la forme des pièces 2, 7, 17, 12 au voisinage des axes de rotation 1 et 11. L'écartement des pièces 2 et 7 sous l'action du ressorts 3 est limité par une vis 28 coulissant dans un trou de la pièce 2 et qui est vissée dans la pièce 7. L'écartement des pièces 16 et 12 sous l'action du ressort 13 est limité par une vis 36 coulissant dans un trou de la pièce 12 et qui est vissée dans la pièce 16.

La description précédente concernait la coupe d'un fibre dénudée à son extrémité seulement, de telle manière que la paire de mors 6 et 16 serre la fibre sur la gaine 22, alors que la paire de mors 6', 16', serre la fibre 18 dénudée. Les dimensions des mors, 6 et 6', situés du côté du tranchant 5 sont alors différentes pour tenir compte de la différence de diamètre dûe à la gaine 22. Dans le cas où l'utilisateur souhaite couper une fibre en conservant un segment dénudé plus long, les mors 6' et 16' doivent avoir tous les deux des dimensions adaptées au diamètre de la fibre dénudée.

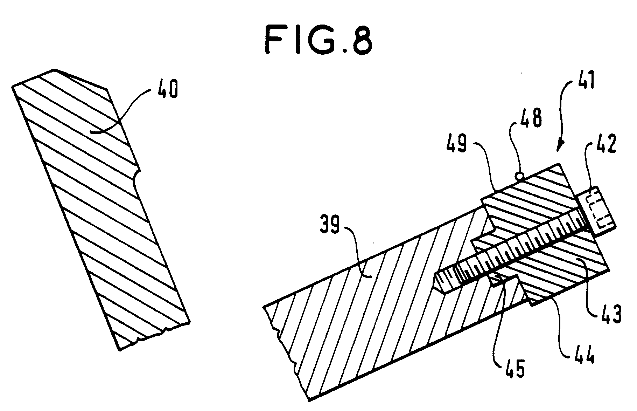

La figure 8 représente une paire de mors, 40 et 41, d'une variante de réalisation de la pince selon l'invention, pouvant être adaptée facilement, par l'utilisateur, pour serrer une fibre dénudée ou non dénudée. Ces mors 40 et 41 correspondent aux mors 6 et 16 de l'exemple de réalisation décrit précédemment. Le mors 40 est identique au mors 6. Ses dimensions ne changent pas en fonction des dimensions de la fibre. Par contre, le mors 41 comporte une pièce démontable 43 qui est retournable pour adapter le mors 41 à deux diamètres de fibre différents correspondant respectivement à une fibre gainée et à une fibre dénudée.

La pièce 43 est fixée sur une pièce 39 analogue à la pièce 17, par une vis 42. La pièce 43 est positionnée avec précision par rapport à la pièce 39 grâce à une saillie 45, ayant une section rectangulaire et un axe parallèle à la fibre 48, insérée dans une rainure creusée à l'extrémité de la pièce 39. La vis 42 traverse la saillie 45 en son milieu, de telle sorte qu'il est possible de démonter la pièce 43, de la tourner de 180°, puis de la remettre en place et de la revisser. Les faces 44 et 49 de la pièce 43 sont alors permutées.

La portée de l'invention ne se limite pas aux exemples de réalisation décrits ci-dessus. De nombreuses variantes sont à la portée de l'homme de l'art. Notamment, il est possible de fixer cette pince sur un support, pour un usage en atelier, en fixant la pièce 12 à un support. L'utilisateur n'a alors qu'à appuyer sur la pièce 2 pour réaliser une coupe. Il est possible de confondre les deux axes 1 et 11. Il est possible d'orienter la plaque de guidage 21 parallèlement au plan des mors.

## Revendications

1. Pince de coupe, à faible encombrement, pour fibre optique, comportant :
- deux paires de mors (6, 6', 16, 16') distantes l'une de l'autre, les deux mors de chaque paire étant rapprochables l'un de l'autre pour immobiliser entre eux, en deux points distants l'un de l'autre, une fibre optique (18) à couper;
- des moyens (1, 7, 11, 17) pour rapprocher l'un de l'autre les deux mors de chaque paire de façon à appliquer les deux paires de mors respectivement en deux points distants de la fibre;
- un galbe (19) situé entre les deux paires de mors (6, 6', 16, 16'), d'un côte de la direction d'immobilisation de la fibre entre les deux paires de mors;
- un tranchant (5) situé en vis-à-vis du galbe, de l'autre côté de la direction d'immobilisation de la fibre;
- des moyens (12) pour appliquer le galbe (19) contre la fibre immobilisée par les deux paires de mors afin de la tendre entre ces deux paires de mors; et
- des moyens (2) pour appliquer le tranchant (5) contre la fibre tendue entre les deux paires de mors;
caractérisée en ce que :
- les moyens pour rapprocher l'un de l'autre les deux mors (6, 6', 16, 16') de chaque paire comportent une première pièce (7) solidaire d'un premier mors (6, 16) de chacune des deux paires de mors, montée tournante autour d'un axe (1) parallèle à la direction d'immobilisation de la fibre; et une deuxième pièce (17) solidaire d'un second mors de chacune des deux paires de mors, montée tournante autour d'un axe (11) également parallèle à la direction d'immobilisation de la fibre;
- les moyens pour appliquer le galbe (19) contre la fibre immobilisée comportent une troisième pièce (12) solidaire du galbe, montée tournante autour d'un axe (11) également parallèle à la direction d'immobilisation de la fibre; et
- les moyens pour appliquer le tranchant contre la fibre comportent une quatrième pièce (2) solidaire du tranchant, montée tournante autour d'un axe (1) également parallèle à la direction d'immobilisation de la fibre.

2. Pince selon la revendication 1, caractérisé en ce que:
- la première (7) et la deuxième (17) pièces sont montées de façon à tourner en sens inverse l'une de l'autre, et sont écartées l'une de l'autre par un premier ressort de rappel (20);
- la quatrième (2) et la première (7) pièces sont montées de façon à tourner dans le même sens, la quatrième pièce étant disposée à l'extérieur de la première pièce et reliée à cette dernière par un deuxième ressort (3); ce ressort (3) transmettant à la première pièce (7) une force éventuellement exercée par un utilisateur sur la quatrième pièce (2);
- la troisième (12) et la deuxième (17) pièce sont montées de façon à tourner dans le même sens, la troisième pièce étant disposée à l'extérieur de la deuxième pièce et reliée à cette dernière par un troisième ressort (13); ce ressort transmettant à la deuxième pièce (17) une force éventuellement exercée par un utilisateur sur la troisième pièce (12);
et en ce que ces ressorts sont tels que, lorsque deux forces de valeurs croissantes sont exercées progressivement sur la troisième (12) et la quatrième pièce (2), respectivement :
- les mors (6, 6', 16, 16') se ferment avant que le galbe (19) soit appliqué contre la fibre;
- et le galbe (19) est appliqué contre la fibre avant que le tranchant (5) soit appliqué contre la fibre.

3. Pince selon la revendication 1, caractérisée en ce qu'elle comporte en outre des moyens pour guider la fibre (18) devant le galbe (19) et le tranchant (5), comportant :
- une plaque (21) creusée d'un sillon en V (25), située à l'extérieur des deux paires de mors (6, 6', 16, 16'), et accessible à l'opérateur, pour permettre à celui-ci de presser la fibre dans le sillon, avec l'un de ses doigts;
- et un bras (24) fixé à l'un des mors (6') pour former avec celui-ci une encoche en V, ayant un plan orthogonal à la fibre, et dont le fond détermine la position de la fibre.

4. Pince selon la revendication 1, caractérisée en ce qu'au moins l'un des mors (41) comporte une pièce (43) démontable et retournable pour adapter le mors (41) à deux diamètres de fibre différents correspondant respectivement à une fibre gainée et à une fibre dénudée.

## Claims

1. A compact tool for cutting optical fibers, the tool comprising:
two pairs of jaws (6, 6', 16, 16') spaced apart from each other, the two jaws of each pair being brought together for holding between them an optical fiber (18) to be cut at two points spaced apart from each other;
means (1, 7, 11, 17) for bringing together the two jaws of each pair so as to apply the two pairs of jaws against two respective spaced apart points of the fiber;
an anvil (19) situated between the two pairs of jaws (6, 6', 16, 16') on the side of the fiber-holding direction between the two pairs of jaws;
a chisel (5) situated opposite the anvil, on the other side of the fiber-holding direction;
means (12) for applying the anvil (19) against the fiber held between the two pairs of jaws so as to put the fiber under tension between said two pairs of jaws; and
means (2) for applying the chisel (5) against the tensioned fiber between the two pairs of jaws;
the tool being characterized in that:
the means for bringing together the two jaws (6, 6', 16, 16') of each pair comprise a first part (7) firmly attached to a first jaw (6, 16) of each of the two pairs of jaws, mounted to rotate about axes (1) that are parallel to the fiber-holding direction; and a second part (17) firmly attached to a second jaw of each of the two pairs of jaws, mounted to rotate about axes (11) that are likewise parallel to the fiber-holding direction;
the means for applying the anvil (19) against the held fiber include a third part (12) firmly attached to the anvil, mounted to rotate about an axis (11) that is likewise parallel to the fiber-holding direction; and
the means for applying the chisel against the fiber include a fourth part (2) firmly attached to the chisel, mounted to rotate about an axis (1) that is likewise parallel to the fiber-holding direction.

2. A tool according to claim 1, characterized in that:
the first part (7) and the second part (17) are mounted so as to rotate in opposite directions to each other, and are moved apart from each other by a first return spring (20):
the fourth part (2) and the first part (7) are mounted so as to rotate in the same direction, the fourth part being placed outside the first part and being linked thereto by a second spring (3); said spring (3) transmitting a force to the first part (7) which is optionally exerted by a user on the fourth part (2);
the third part (12) and the second part (17) are mounted so as to rotate in the same direction, the third part being placed outside the second part and being linked thereto by a third spring (13); said spring transmitting a force to the second part (17) which is optionally exerted by a user on the third part (12);
and in that said springs are such that when two forces of increasing value are progressively exerted on the third part (12) and the fourth part (2) respectively:
the jaws (6, 6', 16, 16') close before the anvil (19) is applied against the fiber; and
the anvil (19) is applied against the fiber before the chisel (5) is applied against the fiber.

3. A tool according to claim 1, characterized in that it further includes means for guiding the fiber (18) between the anvil (19) and the chisel (5), said means comprising:
a plate (21) having a V-groove (25) formed therein and situated outside the two pairs of jaws (6, 6', 16, 16'), the plate being accessible to the operator to enable the operator to press the fiber into the groove by applying finger pressure thereto; and
an arm (24) fixed to one of the jaws (16') to form a V-notch in association with said jaw, the V-notch having a plane orthogonal to the fiber and having a bottom that determines the position of the fiber.

4. A tool according to claim 1, characterized in that at least one of the jaws (41) includes a part (43) which can be removed and rotated to adapt the jaw (41) to two different fiber diameters corresponding respectively to a covered fiber and to a bare fiber.

## Patentansprüche

1. Platzsparende Schneidezange für eine Lichtleitfaser, die aufweist:
- zwei voneinander entfernte Spannbackenpaare (6, 6', 16, 16'), wobei die beiden Spannbacken jedes Paars einander angenähert werden können, um zwischen sich in zwei voneinander entfernten Punkten eine abzuschneidende Lichtleitfaser (18) festzuhalten;
- Mittel (1, 7, 11, 17), um die Spannbacken jedes Paars einander anzunähern, um die beiden Spannbackenpaare an die Faser an zwei entfernten Punkten anzulegen;
- eine Ausbauchung (19), die sich zwischen den beiden Spannbackenpaaren (6, 6', 16, 16') auf einer Seite der Achse der Faser befindet,
- eine Schneide (5) gegenüber der Ausbauchung auf der anderen Seite der Achse der Faser,
- Mittel (12), um die Ausbauchung (19) gegen die zwischen den beiden Spannbackenpaaren festgehaltene Faser anzulegen, um sie zwischen diesen beiden Spannbackenpaaren zu spannen, und
- Mittel (2), um die Schneide (5) gegen die zwischen den beiden Spannbackenpaaren gespannte Faser anzulegen,
dadurch gekennzeichnet, daß
- die Mittel, um die beiden Spannbacken (6, 6', 16, 16') jedes Paars einander anzunähern, ein erstes Bauteil (7), das mit einer ersten Spannbacke (6, 16) jedes der beiden Spannbackenpaare fest verbunden und um eine Achse (1) parallel zur Achse der Faser drehbar angeordnet ist, und ein zweites Bauteil (17) aufweisen, das mit einer zweiten Spannbacke jedes der beiden Spannbackenpaare fest verbunden und um eine Achse (11) schwenkbar angeordnet ist, die ebenfalls parallel zur Faserachse liegt,
- die Mittel, um die Ausbauchung (19) gegen die festgehaltene Faser anzulegen, ein drittes fest mit der Ausbauchung verbundenes Bauteil (12) aufweisen, das um eine ebenfalls zur Faserachse parallele Achse (11) drehbar angeordnet ist,
- die Mittel zum Anlegen der Schneide gegen die Faser ein viertes, fest mit der Schneide verbundenes Bauteil (2) aufweisen, das um eine ebenfalls zur Faserachse parallele Achse (1) drehbar angeordnet ist.

2. Zange nach Anspruch 1, dadurch gekennzeichnet, daß
- das erste (7) und das zweite Bauteil (17) so angeordnet sind, daß sie in zueinander entgegengesetzter Richtung drehen und werden von einer ersten Rückholfeder (20) voneinander entfernt,
- das vierte (2) und das erste Bauteil (7) derart angeordnet sind, daß sie in gleicher Richtung drehen, wobei das vierte Bauteil außerhalb des ersten Bauteils und mit diesem über eine zweite Feder (3) verbunden angeordnet ist, die zum ersten Bauteil (7) eine Kraft überträgt, die eventuell von einem Benutzer auf das vierte Bauteil (2) ausgeübt wird,
- das dritte (12) und das zweite Bauteil (17) so angeordnet sind, daß sie in gleicher Richtung drehen, wobei das dritte Bauteil außerhalb des zweiten Bauteils angeordnet und mit diesem letzteren über eine dritte Feder (13) verbunden ist, die Feder auf das zweite Bauteil (17) eine Kraft überträgt, die eventuell von einem Benutzer auf das dritte Bauteil (12) ausgeübt wird,
- und daß diese Federn derart gewählt sind, daß, wenn zwei Kräfte wachsender Werte progressiv auf das dritte (12) bzw. vierte Bauteil (2) ausgeübt werden:
. die Spannbacken (6, 6', 16, 16') sich schließen, bevor die Ausbauchung (19) sich gegen die Faser anlegt,
. und die Ausbauchung (19) sich gegen die Faser anlegt, ehe die Schneide (5) sich gegen die Faser anlegt.

3. Zange nach Anspruch 1, dadurch gekennzeichnet, daß sie außerdem Mittel aufweist, um die Faser (18) vor der Ausbauchung (19) und der Schneide (5) zu führen, wobei diese Mittel aufweisen:
- eine Platte (21) mit einer V-förmigen Rille (25), die sich außerhalb der beiden Spannbackenpaare (6, 6', 16, 16') befindet und für den Benutzer zugänglich ist, um es ihm zu erlauben, mit einem seiner Finger die Faser in die Rille zu drücken,
- und einen an einer der Spannbacken (6') befestigten Arm (24), um mit dieser eine V-förmige Kerbe zu bilden, die eine zur Faser senkrechte Ebene aufweist und deren Grund die Position der Faser bestimmt.

4. Zange nach Anspruch 1, dadurch gekennzeichnet, daß mindestens eine der Spannbacken (41) ein abnehmbares und umdrehbares Bauteil (43) aufweist, um die Spannbacke (41) an zwei verschiedene Faserdurchmesser anzupassen, die einer umhüllten bzw. einer nicht umhüllten Faser entsprechen.
